# FASCICULE DE BREVET EUROPEEN

(11) **EP 0 494 813 B1**
(45) Date de publication et mention de la délivrance du brevet: **07.06.1995**
(21) Numéro de dépôt: 92400023.5
(22) Date de dépôt: 06.01.1992
(51) Int. Cl.: F16M 11/18

(54) **Dispositif de translation par télécommande de matériel, notamment audio-visuel embarqué sur un mobile suspendu**
Auf einer aufgehängten, bewegbaren Tragvorrichtung montierte Vorrichtung zur feingesteuerten Linearbewegung von Gegenständen, insbesondere audio-visuellen Geräten
System for remotely controlled movement of equipment, especially audio-video equipment on a suspended mobile support

(30) Priorité: 07.01.1991 FR 9100124
(43) Date de publication de la demande: 15.07.1992
(73) Titulaire: CANAL + (Société Anonyme), F-75015 Paris (FR); Pallot, Alain, F-93800 Epinay sur Seine (FR)
(72) Inventeur: Pallot, Alain, F-93800 Epinay sur Seine (FR)
(74) Mandataire: Poidatz, Emmanuel

(56) Documents cités:
- FR-A- 2 489 230
- US-A- 2 538 910
- US-A- 2 633 054
- US-A- 3 935 380
- US-A- 4 625 938

## Description

La présente invention concerne un dispositif de translation par télécommande, de matériel notamment audio-visuel embarqué sur un mobile accroché à des moyens de suspension fixes et susceptible d'être déplacé, par des moyens d'entraînement, au dessus d'un événement à enregistrer se déroulant au sol en suivant son déplacement évolutif, à partir d'un poste de pilotage fixe (voir par exemple le document FR-A-2 489 230).

Il est connu un dispositif de ce type, dont les moyens de suspension ne sont pas fixes, mais consistent à accrocher une boule à un hélicoptère dans laquelle est placée une caméra qui est amortie en vibrations et qui est apte à conserver une horizontalité de référence. Un tel procédé est utilisé notamment pour les prises de vues héliportées, par exemple du Tour de France, des 24 heures du Mans etc..., en fait, lors de manifestations de grandes envergures se déployant sur une distance importante pour justifier de l'emploi d'un hélicoptère, qui reste d'un prix de revient d'exploitation élevé. Dans ce cas, c'est donc l'hélicoptère qui assure la translation de la boule. Sur la base de ce principe et de manière également connu, il a été imaginé de remplacer l'hélicoptère par un câble tendu entre deux points fixes, au dessus de l'événement à couvrir et auquel est suspendu la boule précitée munie en l'occurence d'un moyen auto moteur la rendant mobile en translation sur ledit câble.

Bien entendu, une telle application ne trouve son utilisation que dans le filmage d'événements se déroulant dans des limites pouvant être raisonnablement reliées par un câble. Il s'agit par exemple des limites d'un terrain de sport tels que de foot-ball ou de base-ball, ou encore de pistes d'athlétisme. En résumé, ces limites sont de l'ordre de 200 mètres.

Au delà, on considère que la flèche du câble, accentuée par le poids de la boule équipée, est trop importante.

L'inconvénient majeur de ce type dispositif connu, réside dans le fait que l'on ne maîtrise pas le plan de travail de la caméra solidaire de la boule. En effet, cette dernière est animée d'un mouvement pendulaire néfaste à des prises de vues satisfaisantes. Ce mouvement pendulaire ou ballant est accentué lors d'accélérations ou de freinages brutaux, ce qui limite la vitesse de déplacement en translation de la boule, si l'on veut éviter ce type d'inconvénient. Or, certains événements sportifs telle qu'une course de 100 mètres par exemple, nécessite une vitesse de déplacement élevée, de l'ordre de 10 mètres/seconde. Il en est de même pour modifier très rapidement un angle de prise de vue. Un autre inconvénient également d'importance est relatif à la sécurité d'emploi d'un tel dispositif, qui, pesant une cinquantaine de kilos environ, n'est soutenu que par un seul câble. Cela représente un réel danger pour une foule ou des sportifs se trouvant en dessous de la boule, en cas de rupture du câble. Le but de la présente invention est de remédier à tous ces inconvénients et concerne à cet effet un dispositif de translation par télécommande, de matériel notamment audiovisuel embarqué sur un mobile accroché à des moyens de suspension fixes et susceptible d'être déplacé, par des moyens d'entraînement, au dessus d'un événement à enregistrer se déroulant au sol en suivant son déplacement évolutif, à partir d'un poste de pilotage fixe.

A cette fin, l'invention propose un dispositif de translation par télécommande de matériel notamment audio-visuel embarqué sur un chariot mobile accroché à des moyens de suspension fixes et susceptible d'être déplacé, par des moyens d'entraînement, au dessus d'un événement à enregistrer se déroulant au sol en suivant son déplacement évolutif, à partir d'un poste de pilotage fixe, les moyens de suspension du mobile étant constitués par au moins deux câbles parallèles tendus chacun entre deux points d'ancrage fixes, pour définir entre eux un plan (P) relativement stable dans lequel est entraîné en translation le chariot mobile, selon une orientation choisie dudit plan (P), par l'intermédiaire de moyens de guidage latéraux coopérant avec chacun des câbles, caractérisé en ce que les moyens d'entraînement en translation du chariot mobile, sont constitués par un troisième câble monté en boucle fermée, entre au moins deux pylônes opposés dans le sens de la longueur, l'une des extrémités du câble en boucle étant en liaison avec un organe d'entraînement, rotatif dans un sens ou dans l'autre, disposé sur l'un des pylônes alors que son autre extrémité se trouve en liaison avec un dispositif de tension mécanique dudit câble disposé sur l'autre pylône, et en ce que le chariot mobile comporte un châssis quadrangulaire dont les parties avant et arrière disposées entre les câbles parallèles sont solidaires de l'un des côtés de la boucle fermée par le câble, l'autre côté de la boucle restant libre par rapport au chariot.

On comprend aisément que la présence de deux câbles définissant un plan fixé dans lequel est entraîné en translation le mobile, ne peut qu'être favorable à une bonne stabilité de l'ensemble, à plus forte raison comparée à une suspension en un point, comme évoqué ci-dessus.

De plus, la sécurité est notablement renforcée par la présence d'un second câble, jouant simultanément le rôle de câble de secours en cas de rupture de l'un d'eux.

Ce dispositif pourra en outre, avoir un très grand rayon d'action dans les limites précitées, une vitesse de déplacement importante et bénéficier d'une simplicité de montage et de pilotage.

Selon un mode de réalisation avantageux de l'invention, les points d'ancrage fixes des deux câbles de suspension du mobile sont disposés à la partie supérieure d'au moins deux pylônes. Bien entendu, il pourra s'agir de tous types de supports tels que poteaux, barrières, arbres, édifices etc...

L'invention sera encore illustrée sans être aucunement limitée par la description qui suit, faite en référence au dessin annexé sur lequel :
La figure 1 est une vue schématique de l'ensemble d'un dispositif de translation et de son poste de pilotage à distance, selon l'invention.
La figure 2 est une vue schématique de détail montrant selon un perfectionnement de l'invention, des moyens stabilisateurs d'un mobile du dispositif de translation selon l'invention.
La figure 3 est une vue de dessus selon la figure 2.

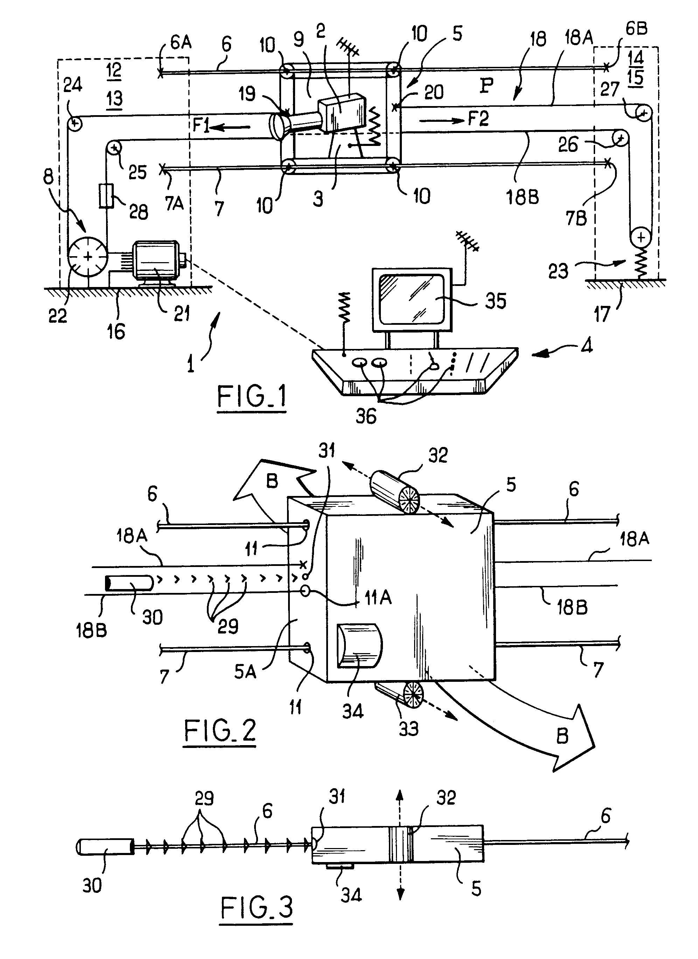

La figure 1 représente un dispositif de translation par télécommande 1 représenté dans son ensemble, et plus particulièrement destiné, dans la présente application, à un matériel audio-visuel. Ce matériel est essentiellement constitué d'une caméra HF 2 fixée sur une tête de commande orientabe angulairement 3, télécommandée à partir d'un poste de pilotage fixe 4 se trouvant au sol, de manière telle à permettre de modifier l'angle de prises de vues horizontal et vertical de ladite caméra 2 par télécommande HF.

Selon l'invention, l'ensemble du matériel audio-visuel est embarqué sur un mobile 5 accroché à des moyens de suspension fixes 6,7 et susceptible d'être déplacé par des moyens d'entraînement 8 au dessus d'un événement à enregistrer se déroulant au sol, en suivant son déplacement évolutif, à partir du même poste de pilotage 4.

Les moyens de suspension 6,7 sont constitués par deux câbles parallèles tendus chacun entre deux points d'ancrage fixes respectivement 6A,6B et 7A,7B.

Les câbles 6,7 ainsi disposés définissent entre eux un plan P relativement stable dans lequel est entraîné en translation le mobile 5, selon une orientation choisie dudit plan P, qui pourra être de toute inclinaison entre une verticale et une horizontale.

Dans le présent exemple de réalisation, le mobile 5 est un chariot composé d'un chassis 9 sur lequel est donc embarqué le matériel et comportant des moyens de guidage latéraux coopérant avec chacun des câbles (6,7).

Ces moyens de guidage sont constitués par quatre roues 10, situées aux quatre angles du chariot mobile 5 de forme quadrangulaire, et coopérant par roulement sur les câbles 6,7 de suspension. Bien entendu, et comme le montre schématiquement la figure 2, les moyens de guidage du chariot mobile 5 peuvent aussi être constitués par des fourreaux latéraux 11, dans lesquels sont susceptibles de coulisser les câbles 6,7 lors d'une manoeuvre dans un sens F1 ou F2.

Comme le montre la figure 1, les points d'ancrage 6A,6B et 7A,7B de chaque câble 6,7, sont disposés à la partie supérieure de quatre pylônes 12,13,14,15 formant entre eux un quadrilatère de dimensions prédéterminées.

Par exemple, le point 6A du câble 6 est accroché au pylône 12, alors que le point 7A du câble 7 est accroché au pylône 13, jouxtant ici le pylône 12. De même, à leurs extrémités opposées, le point 6B du câble 6 est accroché au pylône 14 et le point 7B est quant à lui, accroché au pylône 15. Bien entendu, les points 6A,7A, pourront être accrochés à un même pylône 12 en imaginant une potence horizontale supérieure (non représentée) apte à conférer l'écartement souhaité aux câbles 6,7. Il en serait alors de même des points 6B,7B opposés, du pylône 14.

De tels pylônes sont de hauteurs réglables en fonction de la situation, et sont également démontables par rapport à une assise 16,17 existante ou rapportée par tout moyen.

Selon un mode de réalisation préféré, représenté à la figure 1, les moyens 8 d'entraînement en translation du chariot mobile 5 sont constitués par un troisième câble 18 monté en boucle fermée, entre au moins deux pylônes opposés. On imaginera ici l'emploi de deux pylônes 12,14 précités, mais cela à titre d'exemple uniquement. L'un des côtés de la boucle, 18A par exemple, est solidarisé du chassis 9 du chariot mobile 5, par tout moyens de fixation, en deux points 19,20 situés à des parties antérieure et postérieure dudit chassis 9.

L'autre côté 18B de la boucle, reste donc libre par rapport audit chariot 5. Elle peut aussi, comme le montre la figure 2, coulisser dans un fourreau 11A, de manière à augmenter la stabilité du chariot 5, en complément des câbles 6,7.

L'une des extrémités du câble en boucle 18 est en liaison avec un organe 21 d'entraînement, rotatif dans un sens ou dans l'autre, selon le sens de translation souhaité. L'organe 21 est un motoréducteur auquel est accouplé un volant 22 ou roue de commande, autour de laquelle s'enroule pour être entraînée, une des extrémités de la boucle fermée par le câble 18.

Le motoréducteur 21 et son volant 22 sont disposés à la partie basse d'un pylône 12 et sont reliés à un dispositif de tension mécanique 23 situé à la partie basse de l'autre pylône 14, par le câble d'entraînement 18 tendu sensiblement dans le même plan P du chariot 5, grâce à deux poulies de renvoi 24,25 disposées à la partie supérieure du pylône 12 d'une part, et à deux autres poulies de renvoi 26,27 disposées à la partie supérieure du pylône 14 opposé, d'autre part.

Bien entendu, on peut également imaginer des moyens d'entraînement en translation du chariot 5, constitués par des moteurs électriques (non représentés) embarqués sur le chassis 9 avec une batterie d'alimentation et agissant sur les roues 10 dudit chassis pour constituer des roues automotrices.

Il est à noter qu'en outre, il est prévu un système 28 de rattrapage de longueur du câble en boucle 18, en fonction de la hauteur des pylônes 12,14.

Selon un perfectionnement de l'invention, le troisième câble en boucle 18 comporte des moyens de détection de la position du mobile 5 sur ses câbles fixes 6,7.

Ces moyens sont constitués par exemple pour un rayon optique 29, émis par une cellule photo-électrique 30 fixe, mesurant en permanence la distance la séparant d'un récepteur 31 fixé sur une face 5A du mobile 5, tournée vers ladite cellule 30. Un autre moyen de détection pourrait également consisté à disposer d'un système de comptage de repères posés sur le câble tracteur 18 même.

Le dispositif selon l'invention, comprend également des moyens stabilisateurs aptes (voir figure 2) à limiter le ballant B induit par sa propre translation et par diverses pressions extérieures telle l'action du vent en filmage extérieur.

Ces moyens sont constitués à titre d'exemple, par des turbines 32,33 fixées sur le mobile perpendiculairement au sens de la marche du mobile 5 et par rapport au sol, et agissant de telle sorte que ledit mobile soit maintenu sur une trajectoire idéale grâce à des informations données par un ensemble d'inclinomètres embarqués 34.

Le pilotage du dispositif est effectué à distance par un opérateur agissant grâce à un moniteur de contrôle vidéo 35 recevant une image HF de la caméra 2, par action sur les leviers de commande 36.

Ces leviers 36 permettent les déplacements gauche-droite et droite-gauche du mobile 5 ; l'orientation panoramique verticale et horizontale de la caméra 2 par l'intermédiaire de la tête 3 ; le changement de focale ; la mise au point ; la mise en route d'un enregistrement etc...

Toutes ces commandes sont gérées par le biais de l'informatique, ce qui permet, par extension, d'obtenir des vitesses et des positionnements préselectionnés de la caméra 2.

## Revendications

1. Dispositif (1) de translation par télécommande de matériel (2) notamment audio-visuel embarqué sur un chariot mobile (5) accroché à des moyens de suspension fixes et susceptible d'être déplacé, par des moyens d'entraînement, au dessus d'un événement à enregistrer se déroulant au sol en suivant son déplacement évolutif, à partir d'un poste de pilotage fixe (4), les moyens de suspension du mobile étant constitués par au moins deux câbles parallèles (6,7) tendus chacun entre deux points d'ancrage fixes (6A,6B-7A,7B), pour définir entre eux un plan (P) relativement stable dans lequel est entraîné en translation le chariot mobile (5), selon une orientation choisie dudit plan (P), par l'intermédiaire de moyens de guidage latéraux coopérant avec chacun, des câbles (6,7), caractérisé en ce que les moyens d'entraînement (8) en translation du chariot mobile (5), sont constitués par un troisième câble (18) monté en boucle fermée, entre au moins deux pylônes opposés (12,14) dans le sens de la longueur, l'une des extrémités du câble en boucle (18) étant en liaison avec un organe (21) d'entraînement, rotatif dans un sens ou dans l'autre, disposé sur l'un des pylônes (12,14) alors que son autre extrêmité se trouve en liaison avec un dispositif (23) de tension mécanique dudit câble (18) disposé sur l'autre pylône (14,15), et en ce que le chariot mobile (5) comporte un chassis (9) quadrangulaire dont les parties avant et arrière disposées entre les câbles parallèles (6,7) sont solidaires de l'un des côtés (18A,18B) de la boucle fermée par le câble (18), l'autre côté de la boucle restant libre par rapport au chariot (5).

2. Dispositif selon la revendication 1 caractérisé en ce que l'organe d'entraînement rotatif (21,22), ainsi que le dispositif de tension mécanique (23) du troisième câble en boucle (18) sont disposés tous deux à la partie basse de leur pylône respectif (12,14), la liaison avec le chariot mobile (5) s'effectuant par l'intermédiaire d'un jeu de poulies (24,25-26,27) de renvoi, situées respectivement aux parties hautes de chaque pylône (12,14).

3. Dispositif selon l'une des revendications 1 ou 2 caractérisé en ce que l'organe (21) d'entraînement rotatif, est un motoréducteur.

4. Dispositif selon la revendication 1 caractérisé en ce que les moyens d'entraînement en translation (8) comportent un système (28) de rattrapage de longueur du câble en boucle (18) en fonction de la hauteur des pylônes (12,14).

5. Dispositif selon l'une des revendications 1 ou 2 caractérisé en ce que le troisième câble en boucle (18) comporte des moyens de détection de la position du mobile (5) constitués par des repères situés sur le câble (18) même, et dont le comptage est transmis au poste (4) de pilotage au sol, pour traitement.

6. Dispositif selon la revendication 1 caractérisé en ce que les moyens de guidage du chariot mobile (5) sont constitués par des fourreaux latéraux (11) du chassis (9) dans lesquels sont susceptibles de coulisser les câbles (6,7).

## Claims

1. Device (1) for the translation by remote control of equipment (2), in particular audio-visual equipment loaded on a movable carriage (5), which is attached to stationary suspension means and is capable of being displaced by driving means above an event to be recorded which is taking place on the ground by following its changeable displacement, from a stationary control station (4), the suspension means of the movable carriage consisting of at least two parallel cables (6, 7) each tensioned between two stationary anchor points (6A, 6B-7A, 7B) so as to define therebetween a relatively stable plane (P) in which the movable carriage (5) is set into translation in a direction selected from said plane (P) via lateral guide means co-operating with each of the cables (6, 7), characterised in that the means (8) for setting the movable carriage (5) into translation consist of a third cable (18) installed in a closed loop between at least two towers (12, 14) which are opposed in the lengthwise direction, one of the ends of the looped cable (18) being connected to a driving member (21) which rotates in one or other direction and is arranged on one of the towers (12, 14) whereas its other end is connected to a device (23) for the mechanical tensioning of said cable (18) arranged on the other tower (14, 15), and in that the movable carriage (5) comprises a square frame (9) of which the front and rear portions arranged between the parallel cables (6, 7) are integral with one of the sides (18A, 18B) of the loop closed by the cable (18), the other side of the loop remaining free relative to the carriage (5).

2. Device according to claim 1, characterised in that the rotating driving member (21, 22) as well as the mechanical tensioning device (23) of the third looped cable (13) are both arranged at the bottom portion of their respective tower (12, 14), the connection to the movable carriage (5) being produced via a set of return rollers (24, 25-26, 27) located at the top portions of each tower (12, 14) respectively.

3. Device according to one of claims 1 or 2, characterised in that the rotating driving member (21) is a reduction motor.

4. Device according to claim 1, characterised in that the means (4) setting into translation (8) comprise a system (28) for taking up the length of looped cable (18) as a function of the height of the towers (12, 14).

5. Device according to one of claims 1 or 2, characterised in that the third looped cable (18) comprises means for detecting the position of the movable carriage (5) consisting of identification marks located on the cable (18) itself, the counting of which is transmitted to the control station (4) on the ground for processing.

6. Device according to claim 1, characterised in that the means for guiding the movable carriage (5) consist of lateral sleeves (11) of the frame (9) in which the cables (6, 7) are capable of sliding.

## Patentansprüche

1. Vorrichtung (1) zur Translationsbewegung von insbesondere audio-visuellem Material (2) durch Fernsteuerung, das sich auf einem beweglichen Wagen (5) befindet, welcher an festen Aufhängungseinrichtungen angebracht und geeignet ist, durch Antriebseinrichtungen oberhalb eines aufzunehmenden Ereignisses auf dem Boden entsprechend dessen fortschreitender Bewegung auf der Grundlage eines festen Steuerraumes (4) verschoben zu werden, wobei die Aufhängungseinrichtungen des sich in Bewegung befindlichen Körpers durch wenigstens zwei parallele Seile (6, 7) gebildet sind, die jeweils zwischen zwei festen Verankerungspunkten (6A, 6B - 7A, 7B) gehalten sind, um zwischen ihnen eine verhältnismäßig stabile Ebene (P) zu definieren, in welcher der bewegliche Wagen (5) gemäß einer von der Ebene (P) gewählten Orientierung durch Zwischenschaltung seitlicher, mit jedem der Seile (6, 7) zusammenwirkender Führungseinrichtungen zur Translationsbewegung mitgenommen ist, dadurch gekennzeichnet, daß die Antriebseinrichtungen (8) zur Translationsbewegung des beweglichen Wagens (5) durch ein drittes Seil (18) gebildet sind, das zwischen wenigstens zwei einander gegenüberliegenden Masten (12, 14) in der Richtung seiner Länge in einer geschlossenen Schleife angebracht ist, wobei das eine der Enden des sich in einer Schleife befindlichen Seiles (18) mit einem sich in einer oder in der anderen Richtung drehenden Antriebsorgan (21), welches an dem einen der Masten (12, 14) angeordnet ist, in Verbindung steht, während sich sein anderes Ende mit einer Einrichtung (23) zur mechanischen Spannung des Seiles (18), welche an dem anderen Masten (14, 15) angebracht ist, in Verbindung befindet, und daß der bewegliche Wagen (5) ein viereckiges Gestell (9) umfaßt, dessen zwischen den parallelen Seilen (6, 7) angeordneten Vorder- und Hinterteile mit der einen der Seiten (18A, 18B) der geschlossenen Schleife durch das Seil (18) einstückig sind, wobei die andere Seite der Schleife in bezug auf den Wagen (5) frei bleibt.

2. Vorrichtung gemäß Anspruch 1, dadurch gekennzeichnet, daß das sich drehende Antriebsorgan (21, 22) ebenso wie die Einrichtung (23) zur mechanischen Spannung des dritten, sich in einer Schleife befindlichen Seiles (18) jeweils beide in unteren Bereich ihres entsprechenden Masten (12, 14) angeordnet sind, sich die Verbindung mit dein beweglichen Wagen (5) unter Zwischenschaltung von Umlenkrollen (24, 25 - 26, 27), die entsprechend in oberen Bereichen jedes Masten (12, 14) angeordnet sind, vollzieht.

3. Vorrichtung gemäß einem der Ansprüche 1 oder 2, dadurch gekennzeichnet, daß das sich drehende Antriebsorgan (21) ein Getriebemotor ist.

4. Vorrichtung nach Anspruch 1, dadurch gekennzeichnet, daß die Antriebseinrichtungen (8) zur Translationsbewegung ein System (28) zur Nachstellung der Länge des sich in einer Schleife befindlichen Seiles (18) in Abhängigkeit der Höhe der Masten (12, 14) umfaßt.

5. Vorrichtung gemäß einem der Ansprüche 1 oder 2, dadurch gekennzeichnet, daß das dritte, sich in einer Schleife befindliche Seil (18) Einrichtungen zur Erfassung der Position des sich in Bewegung befindlichen Körpers (5) umfaßt, die durch Markierungen gebildet sind, welche an dem Seil (18) selbst angebracht sind, und deren Zählung dem Steuerraum (4) am Boden zur Verarbeitung übermittelt wird.

6. Vorrichtung gemäß Anspruch 1, dadurch gekennzeichnet, daß die Einrichtungen zur Führung des beweglichen Wagens (5) durch seitliche Hülsen (11) des Gestells (9) gebildet sind, in welchen die Seile (6, 7) zu gleiten geeignet sind.
